# EUROPÄISCHE PATENTSCHRIFT

(11) **EP 1 426 275 B1**
(45) Veröffentlichungstag und Bekanntmachung des Hinweises auf die Patenterteilung: **01.07.2009**
(21) Anmeldenummer: 03027530.9
(22) Anmeldetag: 29.11.2003
(51) Int. Cl.: B62D 65/00, B66C 13/06, B66C 1/22, B66F 7/06, B65G 49/04

(54) **Fahrbare Hubvorrichtung**
Mobile lifting device
Dispositif de levage mobile

(30) Priorität: 05.12.2002 DE 10257108
(43) Veröffentlichungstag der Anmeldung: 09.06.2004
(73) Patentinhaber: EISENMANN Anlagenbau GmbH & Co. KG, 71032 Böblingen (DE)
(72) Erfinder: Ehrenleitner, Franz, 70439 Stuttgart (DE)
(74) Vertreter: Ostertag, Ulrich

(56) Entgegenhaltungen:
- EP-A- 0 963 904
- EP-A- 1 340 709
- EP-A- 1 378 480
- DE-A- 19 819 993

## Beschreibung

Die Erfindung betrifft eine fahrbare Hubvorrichtung nach dem Oberbegriff des Patentanspruchs 1.

Derartige Hubvorrichtungen finden in unterschiedlichsten technischen Gebieten ihre Anwendung. Besonders häufig sind sie anzutreffen in Lackieranlagen, in denen die zu lackierenden Gegenstände in Behandlungsbäder eingetaucht werden müssen, oder etwa in der Rohbau- oder Endmontage von Fahrzeugkarossierien. Sie können aber beispielsweise auch als Regalbediengerät dienen. Allen diesen Anwendungsfällen ist gemeinsam, daß die Gegenstände sowohl eine translatorische (horizontale) Bewegung als auch eine vertikale Bewegung ausführen müssen.

Die einfachste konstruktive Art, eine Hubplattform, anzuheben oder abzusenken besteht darin, diese an mehreren, im allgemeinen vier, Seilen oder Ketten aufzuhängen und die effektive Seil- bzw. Kettenlänge durch entsprechendes Auf- bzw. Abwickeln der Seile bzw. Ketten auf angetriebenen Trommeln zu verändern. Hier stellt sich jedoch das Problem, daß bei der Einwirkung seitlicher externer Kräfte sowie seitlicher Trägheitskräfte die Hubplattform unkontrollierte seitliche Bewegungen ausführen, insbesondere in seitlicher Richtung ins Schwingen kommen kann. Unter dem Begriff "seitlich" wird hier jede von der Vertikalen abweichende Richtung verstanden, sei dies nun in Bewegungsrichtung der Hubvorrichtung oder senkrecht zu dieser. Bei bekannten fahrbaren Hubvorrichtungen der eingangs genannten Art sind daher Stabilisierungseinrichtungen vorgesehen, welche derartige seitliche Bewegungen unterbinden sollen.

Vom Markt her bekannt sind beispielsweise fahrbare Hubvorrichtungen, bei denen die Stabilisierungseinrichtung von Scherengittern gebildet wird, welche oben an dem Tragwagen und unten an der Hubplattform angebracht sind. Diese Scherengitter sorgen dafür, daß die an den Seilen oder Ketten hängende Hubplattform keine seitlichen Bewegungsfreiheitsgrade besitzt.

Bei der in der EP 1 106 563 A2 beschriebenen Hubvorrichtung, die ebenfalls zur eingangs genannten Art gehört, erfolgt die Stabilisierung der Hubplattform gegen seitliche unerwünschte Bewegungen durch eine besondere Führung der Seile bzw. Ketten zwischen dem Tragwagen und der Hubplattform.

Eine weitere Hubvorrichtung der eingangs genannten Art ist in der EP 1 340 709 A1 bekannt geworden, welche dem Oberbegriff des unabhängigen Anspruchs 1 entspricht. Dort dienen in einer Ausgestaltung gelenkig miteinander verbundene, in wenigstens einer Hubposition Y-förmig angeordnete starre Konstruktionselemente der Stabilisierung der Hubbewegung, während das flexible Zugmittel dem Anheben oder Absenken der Hubplattform dient. Die Vielzahl der starren Konstruktionselemente steigert das Eigengewicht der Hubvorrichtung unerwünscht.

Alle oben genannten Beispiele für fahrbare Hubstationen besitzen eine verhältnismäßig aufwendige Konstruktion.

Aufgabe der vorliegenden Erfindung ist es, eine fahrbare Hubvorrichtung der eingangs genannten Art derart auszugestalten, daß der konstruktive Aufwand reduziert ist.

Diese Aufgabe wird erfindungsgemäß durch eine Vorrichtung mit den im Patentanspruch 1 genannten Merkmalen gelöst.

Mit der vorliegenden Erfindung wird erstmals ein Grundgedanke verlassen, dem der Stand der Technik verhaftet war: Danach wurde bisher stets angestrebt, die Last gegenüber den Tragwagen möglichst exakt in vertikaler Richtung zu bewegen und keinerlei seitliche Auslenkungen zuzulassen. Die Folge dieses konstruktiven Grundgedankens war die verhältnismäßig komplizierte Bauweise der Stabilisierungseinrichtung.

Die Erfindung erkennt, daß es in den meisten Fällen durchaus möglich ist, eine Vertikalbewegung der Last mit einer horizontalen Bewegung zu verbinden, sofern nur die Horizontalbewegung exakt definiert und kontrolliert ist. Diese Erkenntnis eröffnet der Erfindung den Weg, als Stabilisierungseinrichtung ein oder mehrere einfache, starre Schwenkglied(er) zu verwenden, welche(s) einerseits am Tragwagen und andererseits an der Hubplattform verschwenkbar befestigt sind (ist). Bei einer Hub- bzw. Senkbewegung der Hubplattform bewegt sich der Befestigungspunkt jedes Schwenkgliedes an der Hubplattform auf einem Kreis. Dies bedeutet, daß auch bei nicht bewegtem Tragwagen jede Vertikalbewegung der Last zwangsläufig mit einer wohl definierten Horizontalbewegung verbunden ist, da sich der Abstand der beiden Befestigungspunkte jedes Schwenkgliedes in horizontaler Richtung, also die Projektion der Länge des Schwenkgliedes auf die Horizontale, proportional zum Kosinus des Schwenkwinkels verändert. Derartige kontrollierte Horizontalbewegungen sind jedoch in fast allen Fällen hinnehmbar, da sie im voraus in die Bewegung des Tragwagens eingerechnet werden können. Als konstruktives Element ist ein Schwenkglied außerordentlich robust und preiswert.

Dadurch, dass die Hebeeinrichtung mindestens zwei flexible Zugmittel umfasst, die unabhängig voneinander antreibbar sind, ergibt sich ein zusätzlicher Freiheitsgrad in der Bewegung der Last: Diese kann durch unterschiedliches Ausfahren oder Einziehen der flexiblen Zugmittel auch in eine Kippstellung gebracht werden, wodurch beispielsweise ein Eintauchvorgang in eine Behandlungsflüssigkeit günstiger verlaufen kann.

Die Hubplattform kann einen im wesentlichen rechteckigen Grundrahmen aufweisen, an welchem an gegenüberliegenden, parallelen Rechteckseiten jeweils zwei Zugmittel befestigt sind. Diese Art der Aufhängung erlaubt eine besonders günstige Lastverteilung auf die verschiedenen Seile oder Ketten; ihr wohnt von Hause aus eine besondere Stabilität inne.

Am Grundrahmen sind zweckmäßigerweise mehrere sich nach unten erstreckende Haltestreben befestigt, an welchen die Last lösbar befestigt werden kann. Der Schwerpunkt der Hubplattform befindet sich also, insbesondere bei aufgelegter Last, deutlich unterhalb derjenigen Stelle der Hubplattform, an der die Zugmittel und auch das Schwenkglied befestigt sind.

Bei einer besonders bevorzugten Ausführungsform der Erfindung ist eine Steuerung vorgesehen, welcher ein für die Vertikalposition der Hubplattform repräsentatives Signal zugeführt wird und welche nach diesen Signalen den Tragwagen horizontal so verfährt, daß die mit der Vertikalbewegung der Hubplattform verbundene Horizontalbewegung zumindest teilweise kompensiert wird. Mit dieser Ausgestaltung ist eine exakte Vertikalbewegung der Last im Raum möglich, da die Seitwärtsbewegung der Last gegenüber dem Tragwagen, die mit dem Verschwenken des Schwenkgliedes bzw. der Schwenkglieder verbunden ist, durch eine entsprechende translatorische Bewegung des Tragwagens aufgehoben wird.

Besonders flexibel ist die Hubvorrichtung, wenn sie ihren eigenen Antrieb aufweist. Im allgemeinen werden in industriellen Anlagen, in denen Hubvorrichtungen der hier interessierenden Art zum Einsatz kommen, mehrere derartige Hubvorrichtungen hintereinander auf im wesentlichen demselben Weg durch die Anlage geführt. Besitzt jede derartige Hubvorrichtung ihren eigenen Antrieb, so kann auch jeder Tragwagen unabhängig von anderen Tragwagen diejenige Kompensationsbewegung durchführen, die zur Erzielung einer exakt vertikalen Bewegung der an der fraglichen Hubvorrichtung befindlichen Last erforderlich ist. Dies bedeutet insbesondere auch, daß sich der Abstand zwischen den Tragwagen der einzelnen Hubvorrichtungen verändern kann.

Preiswerter und in vielen Fällen auch ausreichend ist diejenige Ausgestaltung, bei welcher der Tragwagen jeder Hubvorrichtung mit Kupplungsmitteln versehen ist, mit denen er an ein externes Fördersystem ankoppelbar ist. Ein derartiges externes Fördersystem ist beispielsweise eine Förderkette, die sich entlang des Bewegungsweges der Hubvorrichtungen erstreckt. Die Tragwagen der einzelnen Hubvorrichtungen können permanent in Eingriff mit der Förderkette stehen, so daß ihr Abstand voneinander unveränderbar ist. Es ist jedoch auch denkbar, daß das externe Fördersystem ein Schleppkreisförderer ist, in den sich die Tragwagen der einzelnen Hubvorrichtung nach Bedarf einkoppeln bzw. aus dem sie sich wieder auskoppeln können.

Die Zugmittel sind bevorzugt Seile oder Ketten.

Ein Ausführungsbeispiel der Erfindung wird nachfolgend anhand der Zeichnung näher erläutert; es zeigen
- Figur 1: eine perspektivische Ansicht der Hubvorrichtung mit in ihre unterste Position abgesenkter, horizontal ausgerichteter Hubplattform;
- Figur 2: die Seitenansicht zu Figur 1;
- Figur 3: die Hubvorrichtung der Figur 1, jedoch in der obersten Position der horizontal ausgerichteten Hubplattform;
- Figur 4: die Seitenansicht zur Figur 3;
- Figur 5: die Hubvorrichtung der Figuren 1 und 3, jedoch in einer mittleren Position der horizontal ausgerichteten Hubplattform;
- Figur 6: die Seitenansicht zur Figur 5;
- Figur 7: die Vorderansicht zu Figur 5;
- Figur 8: die Hubvorrichtung der Figuren 1, 3 und 5, in der jedoch die Hubplattform in einer Richtung geneigt ist;
- Figur 9: die Seitenansicht zur Figur 8;
- Figur 10: die Hubvorrichtung der Figur 8, in der jedoch die Hubplattform in der entgegengesetzten Richtung verkippt ist;
- Figur 11: die Seitenansicht zu Figur 10.

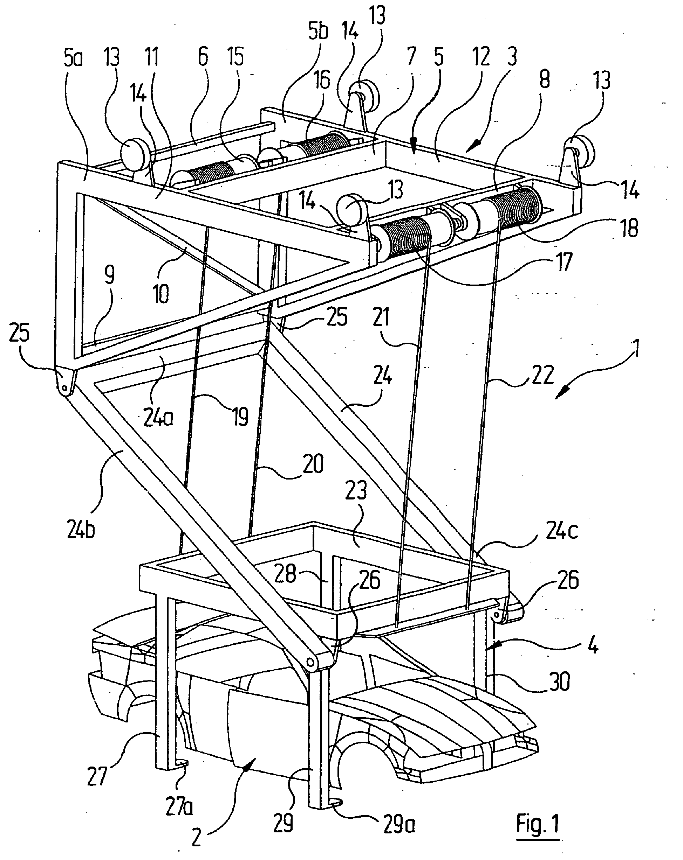

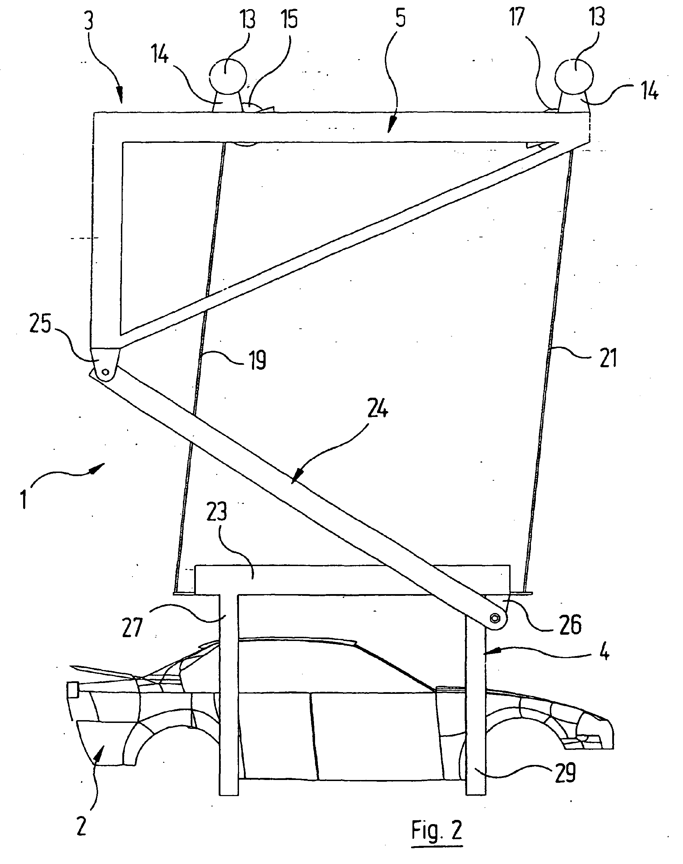

Zunächst wird auf die Figuren 1 und 2 Bezug genommen. Diese zeigen eine insgesamt mit dem Bezugszeichen 1 versehene Hubvorrichtung, welche dazu dient, Fahrzeugkarosserien 2 durch verschiedene Behandlungsstationen, beispielsweise durch die Vorbehandlungsbäder einer Lackieranlage und danach durch ein kataphoretisches Tauchlackierbad zu führen. Die Hubvorrichtung 1 umfasst als Hauptkomponenten einen Tragwagen 3 sowie eine Hubplattform 4, die in noch zu beschreibender Weise von dem Tragwagen 3 in höhenverstellbarer Position gehalten und von diesem mitgeführt wird.

Der Tragwagen 3 besitzt einen verwindungssteifen Rahmen 5, der aus zwei dreieckigen seitlichen Rahmenteilen 5a, 5b und diese miteinander verbindenden Querstreben 6, 7, 8, 9 und einer die vertikale Rechteckseite des Rahmens 5 diagonal durchlaufende Versteifungsstrebe 10 besteht. An jeder der beiden parallelen, horizontalen oberen Längstraversen 11, 12 der beiden Seitenteile 5a, 5b des Rahmens 5 sind jeweils zwei angetriebene Tragrollen 13 angeordnet, die in an den Längstraversen 11, 12 befestigten Traglaschen 14 drehbar gelagert sind. Die Motoren, mit denen die Tragrollen 13 in Drehung versetzt werden können, sind der Übersichtlichkeit halber nicht dargestellt.

Die auf gegenüberliegenden Seiten des Rahmens 5 angeordneten Tragrollen 13 verlaufen jeweils in einem nicht dargestellten Führungsschienenpaar, so daß sich der Tragwagen 3 durch Verdrehen der Tragrollen 13 entlang der Tragschienen in bekannter Weise bewegen kann.

An der in Figur 1 dem Betrachter abgewandten Seitenfläche der Querstrebe 7 des Rahmens 5 sind zwei angetriebene Seiltrommeln 15, 16 drehbar gelagert. In entsprechender Weise sind an der in Figur 1 nach vorne zeigenden Seitenfläche der Querstrebe 8 zwei weitere angetriebene Seiltrommeln 17, 18 drehbar gelagert. Die Antriebsmotoren der Seiltrommeln 15 bis 18 sind wiederum aus Übersichtlichkeitsgründen nicht dargestellt.

Vier Seile 19, 20, 21 und 22, deren obere Bereiche auf den Seiltrommeln 15, 16, 17, 18 aufgewickelt sind, verlaufen von diesen Seiltrommeln 15, 16, 17, 18 zu einem rechteckigen Grundrahmen 23 der Hubplattform 4 und zwar zu dessen gegenüberliegenden, quer zur Bewegungsrichtung verlaufenden Seiten. Sie sind dort befestigt.

Der Tragwagen 3 ist mit der Hubplattform 4 außerdem über ein starres, U-förmiges Schwenkglied 24 verbunden, welches in weiter unten beschriebener Weise als Stabilisierungseinrichtung dient. Das Schwenkglied 24 ist an einem seiner Basis 24a benachbarten Ende in Haltelaschen 25 schwenkbar gelagert, die an den beiden Seitenteilen 5a, 5b des Rahmens 5 des Tragwagens 3 befestigt sind. Die Basis 24a des Schwenkgliedes 24 verläuft dabei parallel zu der Querstrebe 9 des Rahmens 5, dieser benachbart.

Die beiden parallelen Schenkel 24b, 24c des Schwenkgliedes 24 liegen in vertikalen Ebenen, die parallel zur Fahrtrichtung ausgerichtet sind. Ihre von der Basis 24a entfernten Enden sind in Haltelaschen 26 drehbar gelagert, die in der Nähe der von der Basis 24a abgewandten, quer zur Fahrtrichtung verlaufenden Rechteckseite des Grundrahmens 23 befestigt sind.

Von dem Grundrahmen 23 der Hubplattform 4 erstrecken sich vier Haltestreben 27, 28, 29, 30 nach unten, die an ihrem unteren Ende eine nach innen, also aufeinander zu, zeigende Abwinkelung 27a, 28a, 29a, 30a aufweisen. Auf den Abwinkelungen 27a, 28a, 29a, 30a ist die Fahrzeugkarosserie 2 in bekannter, nicht dargestellter Weise aufgestellt und befestigt.

Die Funktion der oben beschriebenen Hubvorrichtung 1 ist wie folgt:

Zunächst seien die Figuren 1 und 2 betrachtet, in welchen sich der Grundrahmen 23 der Hubplattform 4 in einer unteren, abgesenkten Position befindet, dabei aber horizontal ausgerichtet ist. Alle Seile 19, 20, 21, 22 haben also zwischen ihrer Befestigungsstelle an dem Grundrahmen 23 der Hubplattform 4 und den zugeordneten Seiltrommeln 15, 16, 17, 18 dieselbe Länge. Die Seile 19, 20, 21, 22 verlaufen jedoch nicht vertikal, da das Schwenkglied 24 die Hubplattform 4 in den Figuren 1 und 2 etwas nach links zieht. Die Lage der Hubplattform 4 ist völlig stabil; keinerlei seitliche Verkippungen sind möglich, weder in Bewegungsrichtung noch senkrecht zu dieser.

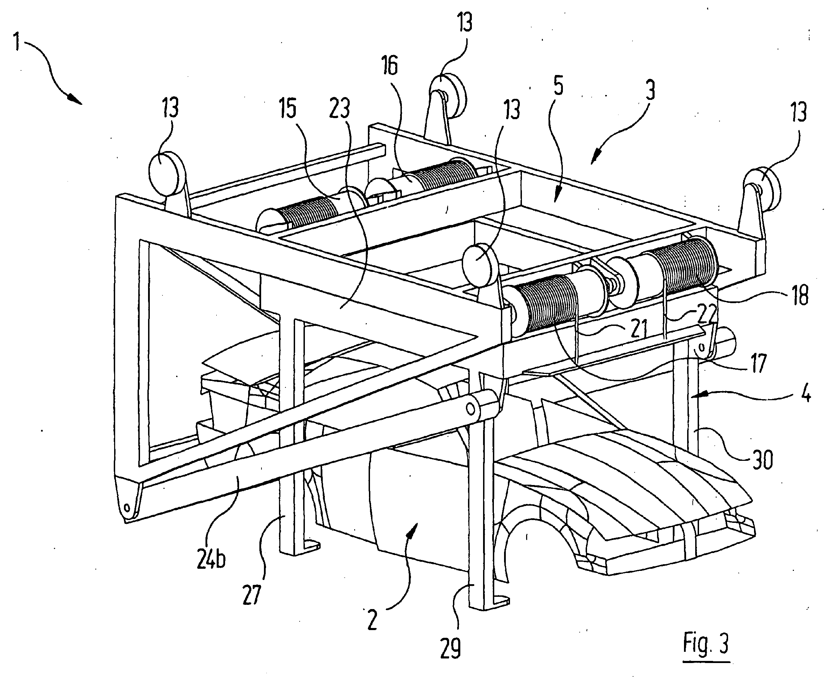

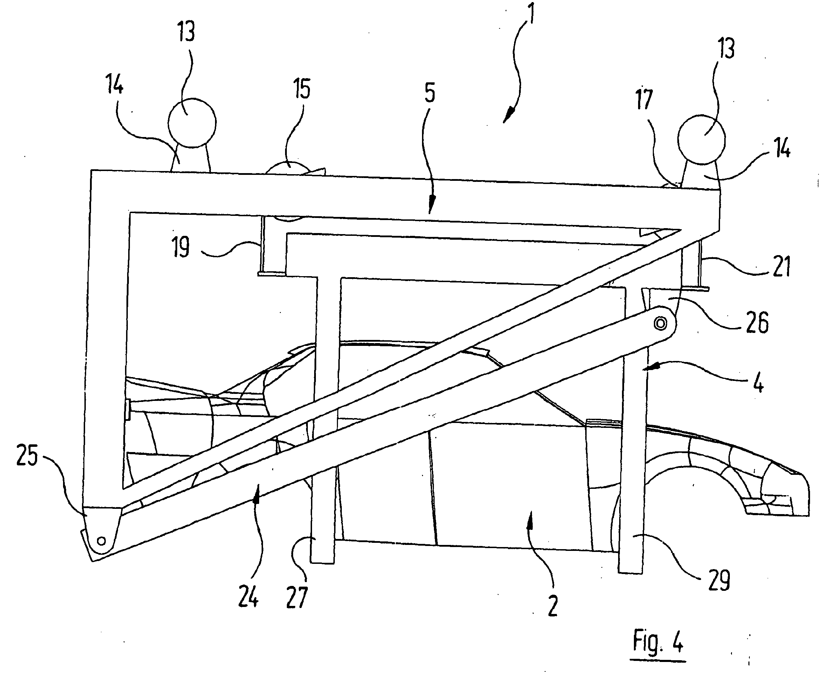

Nunmehr sei angenommen, daß die Hubplattform 4 aus der in den Figuren 1 und 2 dargestellten Position in die in den Figuren 3 und 4 dargestellte Position angehoben werden soll, welche ihre Normalposition darstellt, in welcher sie mit Hilfe des Tragwagens 3 außerhalb von Bearbeitungsstationen verfahren wird. Diese Position wird durch eine gleichmäßige Betätigung aller Seiltrommeln 15, 16, 17, 18 herbeigeführt, bei welcher alle Seile 19, 20, 21, 22 in gleichem Ausmaße verkürzt werden. Die beiden Schenkel 24b, 24a haben sich nunmehr an die schräg verlaufenden Streben der beiden Seitenteile 5a, 5b des Rahmens 5 des Tragwagens 3 angenähert und verlaufen nahezu parallel zu diesen. Da der Schwenkwinkel des Schwenkgliedes 24 gegenüber der Horizontalen in den Figuren 3 und 4 kleiner als in der abgesenkten Position der Figuren 1 und 2 ist, verlaufen die Tragseile 19, 20, 21, 22 nunmehr vertikal.

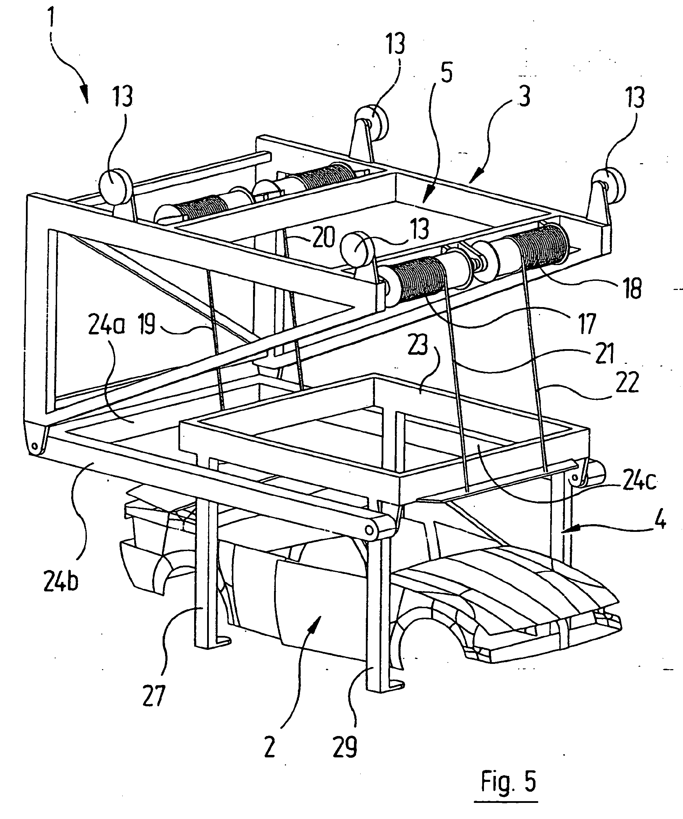

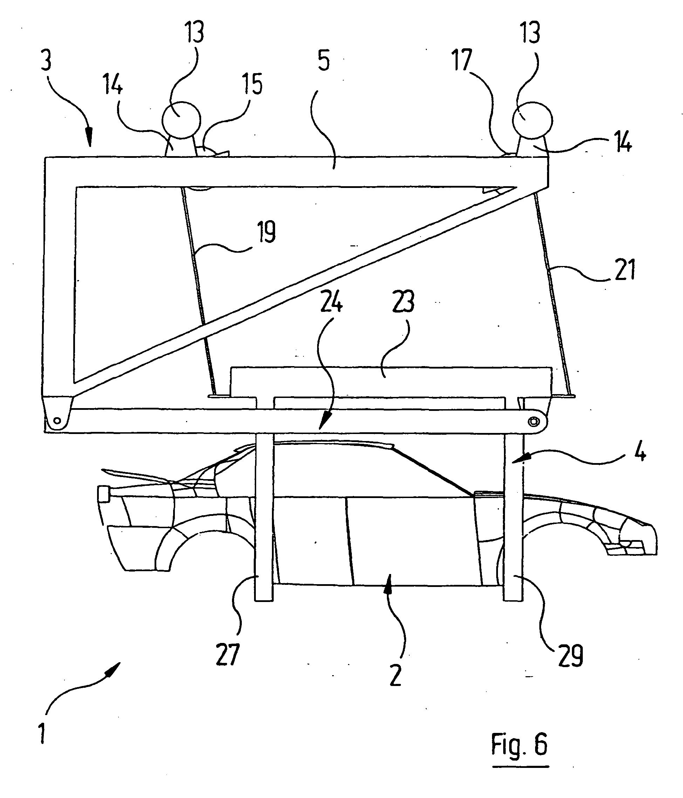

Auf dem Wege von der Position, die in den Figuren 1 und 2 gestellt ist, in die Position der Figuren 3 und 4 durchläuft die Hubplattform 4 die in den Figuren 5 und 6 dargestellte Position, in welcher das Schwenkglied 24 horizontal ist. In dieser hat die Hubplattform 4 in horizontaler Richtung von der vertikalen Rechteckseite des Rahmens 5 des Tragwagens 3 den größten Abstand. Die Seile 19, 20, 21, 22 schließen daher mit der Vertikalen erneut einen Winkel ein, diesmal aber gegenüber der Vertikalen in der entgegengesetzten Richtung wie in den Figuren 1 und 2.

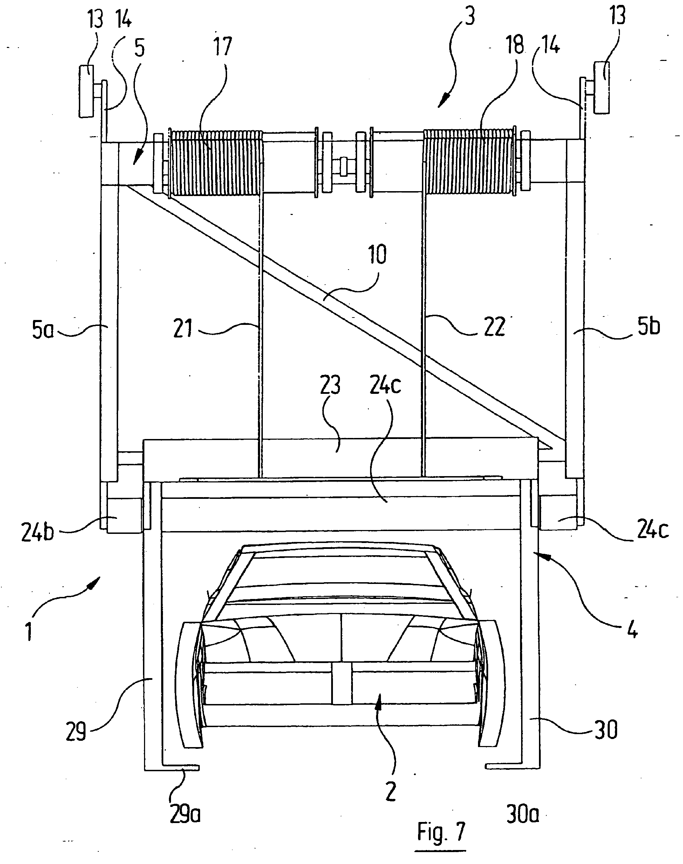

Die Betrachtung der Figuren 1 bis 7 macht deutlich, daß auch bei stillstehendem Tragwagen 3 eine Hubbewegung der Hubplattform 4 mit einer Translationsbewegung der Hubplattform 4 in horizontaler Richtung verknüpft ist. In vielen Fällen, in denen die Position der Fahrzeugkarosserie 2 in Horizontalrichtung nicht genau definiert zu sein braucht, ist dies unschädlich. Dort jedoch, wo es auf eine genaue Positionierung der Fahrzeugkarosserie 2 ankommt, kann die dann unerwünschte Horizontalbewegung der Hubplattform 4, die mit einer Vertikalbewegung zwangsläufig verbunden ist, durch eine entsprechende, in der entgegengesetzten Richtung verlaufende Translationsbewegung des Tragwagens 3 entlang der Tragschienen kompensiert werden. Hierfür besitzt die Hubvorrichtung 1 eine Meßeinrichtung, mit welcher ein elektrisches, für die Höhenposition der Hubplattform 4 repreäsentatives Signal erzeugt werden kann. Beispielsweise kann ein Geber vorgesehen sein, der die Winkelposition des Schwenkgliedes 24 gegenüber der Horizontalen oder einer anderen Bezugsrichtung mißt. Das Ausgangssignal der Meßeinrichtung wird nunmehr der Steuerung der Anlage zugeführt. Diese gibt den Antriebsmotoren für die Tragrollen 13 das Signal, den Tragwagen 3 so zu verfahren, daß bei dem Absenken der Hubplattform 4 deren Lage in horizontaler Richtung konstant bleibt, der Absenkvorgang der Hubplattform 4 im Raum also exakt vertikal erfolgt.

Im allgemeinen folgen in einer Fertigungsanlage mehrere Hubvorrichtungen 1 auf den Tragschienen hintereinander. Werden die Hub- und Senkbewegungen der verschiedenen Hubplattformen 4 in der geschilderten Weise durch Kompensationsbewegungen der entsprechenden Tragwagen 3 so gesteuert, daß sie exakt senkrecht verlaufen, bedeutet dies, daß sich die Abstände zwischen den aufeinander folgenden Hubvorrichtungen 1 verändern. Dies ist besonders einfach dann zu erreichen, wenn alle Hubvorrichtungen 1 mit eigenen Antrieben für ihre Horizontalbewegung ausgestattet sind. In diesem Falle läßt sich beispielsweise auch erreichen, daß alle aufeinander folgenden Fahrzeugkarosserien 2 überall denselben Abstand voneinander aufweisen, während die Abstände der Tragwagen 3, an denen die einzelnen Fahrzeugkarosserien 2 aufgehängt sind, an verschiedenen Stellen unterschiedlich sein können.

Grundsätzlich ist es jedoch auch möglich, die aufeiander folgenden Tragwagen 3 der verschiedenen Hubvorrichtungen 1 in der Gesamtanlage nicht mit eigenen Antrieben sondern mit einem gemeinsamen Kettenantrieb zu versehen. Dies ist insbesondere in denjenigen Fällen möglich, in denen die Hub- oder Senkbewegung der Hubplattformen 4 nicht exakt vertikal zu erfolgen braucht oder alle Hub- und Senkbewegungen gleichzeitig erfolgen, so daß die zur Erzielung einer exakten Vertikalbewegung erforderliche Kompensationsbewegung aller Tragwagen 3 gleichzeitig erfolgen kann.

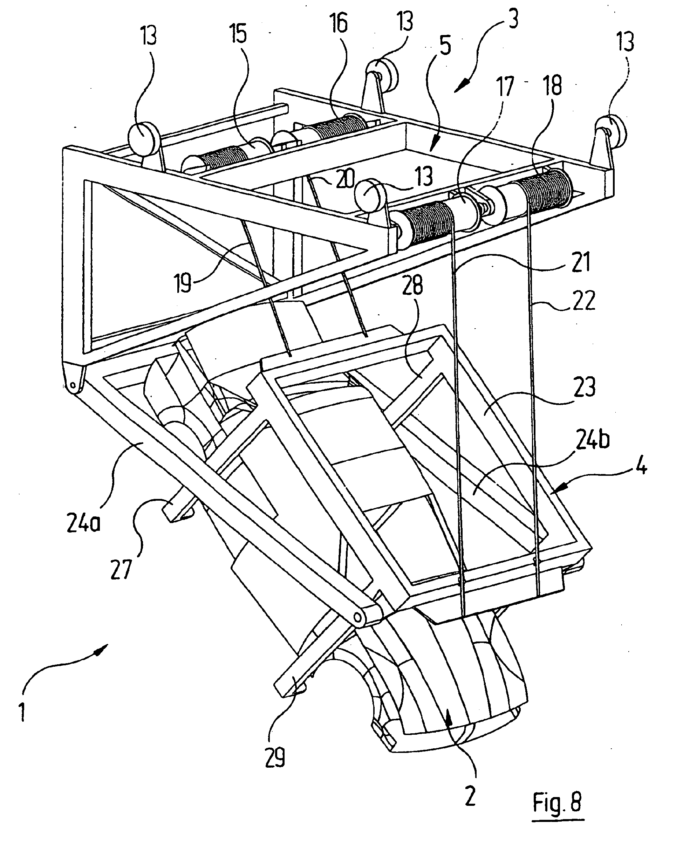

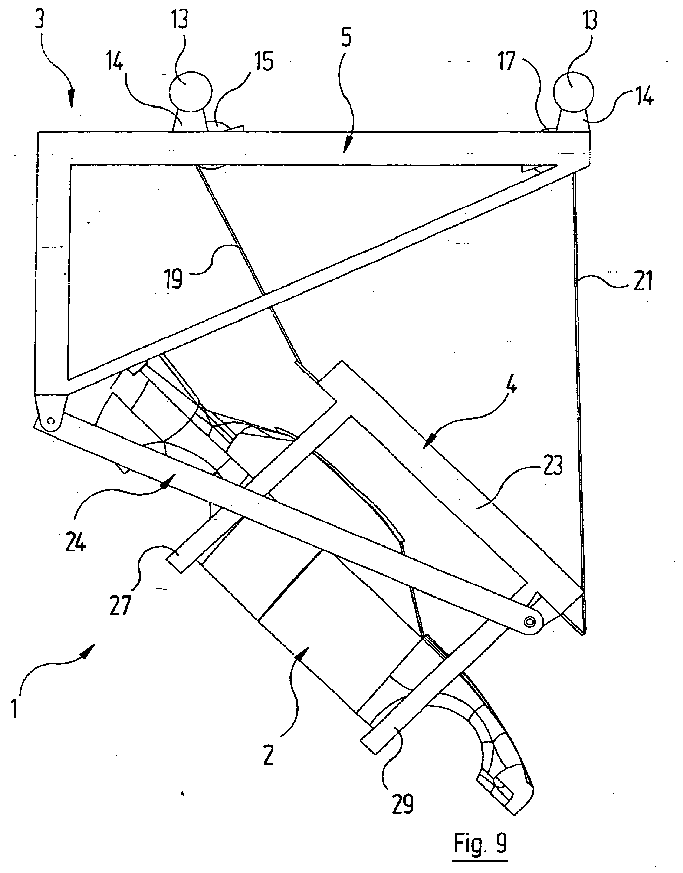

Mit der oben beschriebenen Hubvorrichtung 1 ist es nicht nur möglich, die Hubplattform 4 mit horizontal ausgerichtetem Grundrahmen 23 anzuheben und abzusenken. Vielmehr kann der Grundrahmen 23, der Hub- bzw. Senkbewegung überlagert, auch gekippt werden, wie dies beispielsweise in den Figuren 8 und 9 dargestellt ist. Hier ist durch ein stärkeres Ausfahren der beiden der Vorderseite der Fahrzeugkarosserie 2 benachbarten Seile 21, 22 und entsprechend geringeres Ausfahren der dem Heck der Fahrzeugkarosserie 2 benachbarten Seile 19, 20 der Grundrahmen 23 der Hubplattform 4 so verkippt, daß die Vorderseite der Fahrzeugkarosserie 2 nach unten geneigt ist. Dies kann beispielsweise eine Position sein, die sich besonders zum Eintauchen der Fahrzeugkarosserie 2 in ein Lackbad oder eine sonstige Behandlungsflüssigkeit eignet.

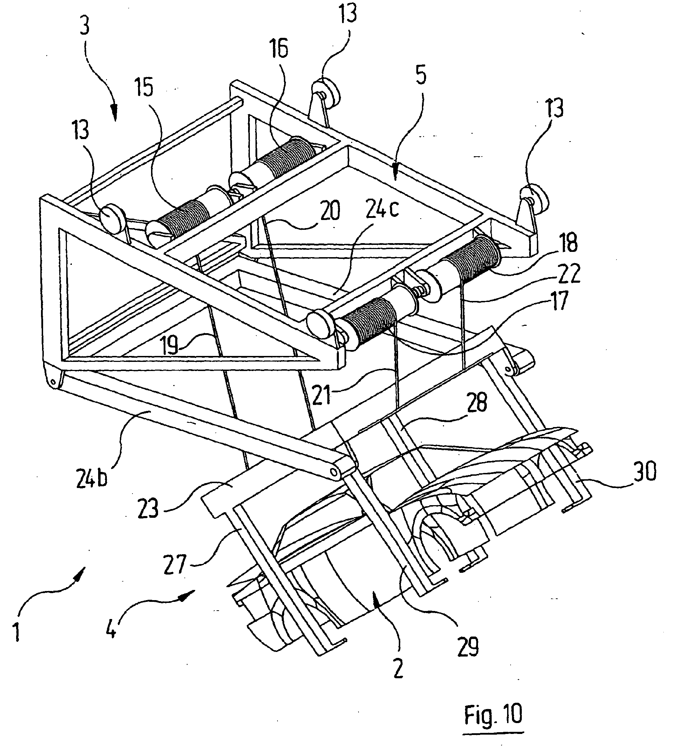

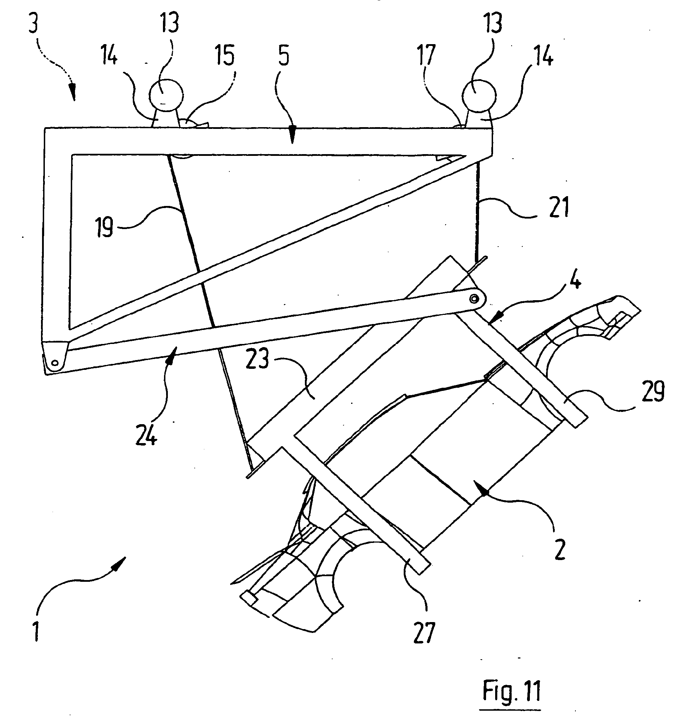

Die Figuren 10 und 11 zeigen eine umgekehrte Neigung des Grundrahmens 22 der Hubplattform 4, bei welcher das Heck der Fahrzeugkarosserie 2 tiefer als die Vorderseite liegt. Auch dies kann eine Position sein, die für das Eintauchen in eine Behandlungsflüssigkeit günstig ist.

Bei einem in der Zeichnung nicht dargestellten Ausführungsbeispiel trägt die Hubplattform die Last nicht direkt sondern über eine Drehvorrichtung, in welcher die Last gehalten ist und die um eine parallel zur Bewegungsrichtung des Tragwagens verlaufende Achse verdrehbar oder verschwenkbar ist. So kann beispielsweise ein Fahrzeug auch um seine Längsachse verdreht oder verschwenkt weren, was insbesondere in der Fahrzeug-Endmontage häufig gewünscht ist.

## Patentansprüche

1. Verfahrbare Hubvorrichtung (1) mit
a) einem entlang eines bestimmten Weges verfahrbaren Tragwagen (3);
b) einer Hubplattform (4) zur Aufnahme einer Last;
c) einer mindestens ein flexibles Zugmittel (19 bis 22) aufweisenden Hebeeinrichtung, mit welcher die Hubplattform (4) mit einer vertikalen Richtungskomponente gegenüber dem Tragwagen (3) bewegt werden kann;
d) einer Stabilisierungseinrichtung, welche eine unkontrollierte seitliche Bewegung der Hubplattform (4) gegenüber dem Tragwagen (3) verhindert,
**dadurch gekennzeichnet, dass**
e) die Hebeeinrichtung mindestens zwei flexible Zugmittel (19 bis 22) aufweist;
f) die mindestens zwei flexiblen Zugmittel (19 bis 22) unabhängig voneinander antreibbar sind;
g) die Stabilisierungseinrichtung von mindestens einem im wesentlichen starren Schwenkglied (24) gebildet ist, das in einem Endbereich direkt mit dem Tragwagen (3) und in einem gegenüberliegenden Endbereich mit der Hubplattform (4) verschwenkbar verbunden ist, derart, dass eine eine vertikale Richtungskomponente besitzende Bewegung der Hubplattform (4) bei stillstehendem Tragwagen (3) stets mit einer definierten Horizontalbewegung verbunden ist.

2. Hubvorrichtung nach Anspruch 1, **dadurch gekennzeichnet, dass** die Hubplattform (4) einen im wesentlichen rechteckigen Grundrahmen (23) aufweist, an welchem an gegenüberliegenden parallelen Rechteckseiten jeweils zwei Zugmittel (19 bis 22) befestigt sind.

3. Hubvorrichtung nach Anspruch 2, **dadurch gekennzeichnet, dass** an dem Grundrahmen (23) mehrere sich nach unten erstreckende Haltestreben (27 bis 30) befestigt sind, an welchen die Last (2) lösbar befestigt werden kann.

4. Hubvorrichtung nach einem der vorhergehenden Ansprüche, **dadurch gekennzeichnet, dass** eine Steuerung vorgesehen ist, welcher ein für die Vertikalposition der Hubplattform (4) repräsentatives Signal zugeführt wird und welche nach diesen Signalen den Tragwagen (3) horizontal so verfährt, dass die mit der Vertikalbewegung der Hubplattform (4) verbundene Horizontalbewegung zumindest teilweise kompensiert wird.

5. Hubvorrichtung nach einem der vorhergehenden Ansprüche, **dadurch gekennzeichnet, dass** der Tragwagen (3) einen eigenen Antrieb für seine Translationsbewegung besitzt.

6. Hubvorrichtung nach einem der Ansprüche 1 bis 4, **dadurch gekennzeichnet, dass** der Tragwagen mit Kupplungsmitteln versehen ist, mit denen er an ein externes Fördersystem ankoppelbar ist.

7. Hubvorrichtung nach einem der vorhergehenden Ansprü-che, **dadurch gekennzeichnet, dass** die Zugmittel (19 bis 22) Seile sind.

8. Hubvorrichtung nach einem der Ansprüche 1 bis 6, **dadurch gekennzeichnet, dass** die Zugmittel (19 bis 22) Ketten sind.

## Claims

1. Mobile lifting device having:
a) a supporting carriage (3) which is capable of travelling along a specific path;
b) a lifting platform (4) for receiving a load;
c) a hoisting apparatus comprising at least one flexible traction means (19 to 22) with the aid of which the lifting platform (4) can be moved with a vertical component of direction in relation to the supporting carriage (3);
d) a stabilising apparatus which prevents an uncontrolled lateral movement of the lifting platform (4) in relation to the supporting carriage (3),
**characterised in that**
e) the hoisting apparatus comprises at least two flexible traction means (19 to 22);
f) said at least two flexible traction means (19 to 22) can be driven independently from each other;
g) the stabilising apparatus is formed by at least one, essentially rigid pivoting member (24) which is swivellably connected, in one end region, directly to the supporting carriage (3) and, in an opposed end region, to the lifting platform (4) in such a way that, when the supporting carriage (3) is stationary, a movement of the platform (4) that possesses a vertical component of direction is always linked with a defined horizontal movement.

2. Lifting device according to claim 1, **characterised in that** the lifting platform (4) has an essentially rectangular base frame (23), to which two traction means (19 to 22) in each case are fastened on opposite, parallel sides of the rectangle.

3. Lifting device according to claim 2, **characterised in that** there are fastened to the base frame (23) a number of downwardly extending retaining struts (27 to 30) to which the load (2) can be detachably fastened.

4. Lifting device according to one of the preceding claims, **characterised in that** a control system is provided, to which a signal which is representative of the vertical position of the lifting platform (4) is fed and which moves the supporting carriage (3) horizontally, in accordance with this signal, in such a way that the horizontal movement which is linked with the vertical movement of the lifting platform (4) is, at least partially, compensated for.

5. Lifting device according to one of the preceding claims, **characterised in that** the supporting carriage (3) possesses its own drive for its translational movement.

6. Lifting device according to one of claims 1 to 4, **characterised in that** the supporting carriage is provided with coupling means by which it can be coupled to an external conveyer system.

7. Lifting device according to one of the preceding claims, **characterised in that** the traction means (19 to 22) are cables.

8. Lifting device according to one of claims 1 to 6, **characterised in that** the traction means (19 to 22) are chains.

## Revendications

1. Dispositif de levage mobile (1), avec
a) un chariot porteur (3), mobile le long d'un parcours spécifique ;
b) une plate-forme de levage (4), destinée à recevoir une charge ;
c) un équipement de levage, présentant au moins un moyen de traction flexible (19 à 22) et par lequel la plate-forme de levage (4) peut être déplacée par rapport au chariot porteur (3) avec une composante de direction verticale ;
d) un équipement de stabilisation, qui empêche un mouvement latéral incontrôlé de la plate-forme de levage (4) par rapport au chariot porteur (3),
**caractérisé en ce que**
e) l'équipement de levage présente au moins deux moyens de traction flexibles (19 à 22) ;
f) les deux moyens de traction flexibles (19 à 22) ou davantage peuvent être entraînés indépendamment les uns des autres ;
g) l'équipement de stabilisation est formé par au moins un organe de pivotement (24) essentiellement rigide qui, dans une région terminale, est relié à pivotement directement au chariot porteur (3) et qui, dans une région terminale opposée, est relié à pivotement à la plate-forme de levage (4), de telle sorte qu'un mouvement de la plate-forme de levage (4) possédant une composante de direction verticale, le chariot porteur (3) étant immobile, s'accompagne toujours d'un mouvement horizontal défini.

2. Dispositif de levage selon la revendication 1, **caractérisé en ce que** la plate-forme de levage (4) présente un cadre de base (23) essentiellement rectangulaire, auquel deux moyens de traction respectifs (19 à 22) sont fixés sur des côtés parallèles opposés du rectangle.

3. Dispositif de levage selon la revendication 2, **caractérisé en ce que** plusieurs entretoises de maintien (27 à 30) s'étendant vers le bas, auxquelles la charge (2) peut être fixée de manière amovible, sont fixées sur le cadre de base (23).

4. Dispositif de levage selon l'une des revendications précédentes, **caractérisé en ce qu'**il est prévu une commande, à laquelle est apporté un signal représentatif de la position verticale de la plate-forme de levage (4) et qui, en fonction de ses signaux, déplace horizontalement le chariot porteur (3) de telle sorte que le mouvement horizontal accompagnant le mouvement vertical de la plate-forme de levage (4) est au moins partiellement compensé.

5. Dispositif de levage selon l'une des revendications précédentes,
**caractérisé en ce que** le chariot porteur (3) possède un propre entraînement pour son mouvement de translation.

6. Dispositif de levage selon l'une des revendications 1 à 4, **caractérisé en ce que** le chariot porteur est pourvu de moyens d'accouplement, par lesquels il peut être accouplé à un système convoyeur externe.

7. Dispositif de levage selon l'une des revendications précédentes, **caractérisé en ce que** les moyens de traction (19 à 22) sont des câbles.

8. Dispositif de levage selon l'une des revendications 1 à 6, **caractérisé en ce que** les moyens de traction (19 à 22) sont des chaînes.
